(19) Europäisches Patentamt / European Patent Office / Office européen des brevets

(11) **EP 2 009 488 A1**

(12) **EUROPEAN PATENT APPLICATION**

(43) Date of publication:
**31.12.2008 Bulletin 2009/01**

(51) Int Cl.:
***G02F 1/13363*** (2006.01)

(21) Application number: **08158619.0**

(22) Date of filing: **19.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **29.06.2007 US 947156 P**

(71) Applicant: **JDS Uniphase Corporation
Milpitas, CA 95035 (US)**

(72) Inventor: **Tan, Kim, Leong
Santa Rosa, CA 95407 (US)**

(74) Representative: **Fulton, David James
Murgitroyd & Company
Scotland House
165-169 Scotland Street
Glasgow
Strathclyde G5 8PL (GB)**

(54) **Near halfwave retarder for contrast compensation**

(57)    Contrast compensation for a liquid crystal display projection system is provided with a trim retarder that includes a single-layer retarder element that has an in-plane retardance that is shifted from a zero-order half-wave at a predetermined wavelength by a predetermined amount. This near half-wave plate provides similar contrast compensation and azimuthal angle sensitivity to conventional relatively low-magnitude trim retarders, yet is readily fabricated with inorganic birefringent crystals with a manageable thickness tolerance.

Fig. 2

**Description**

**MICROFICHE APPENDIX**

Not Applicable.

**TECHNICAL FIELD**

The present application relates generally to contrast compensation for liquid crystal displays, and in particular, to contrast compensation of liquid crystal displays used in high light flux projections systems.

**BACKGROUND OF THE INVENTION**

Liquid-crystal displays (LCDs) are widely used in projection displays for large screen televisions and monitors. One particularly successful LCD-based projection system is a WGP-based LCoS microdisplay system, which uses both wire grid polarizers (WGPs) and liquid crystal on silicon (LCoS) panels. This projection system, which has been proven to exhibit both high resolution and high image contrast when compared to other microdisplay technologies such as transmissive liquid crystal (xLCD), digital light processor (DLP), and direct-view LCD, typically uses three or more microdisplay panels (e.g., for the red, green and blue colour bands) to improve on-screen brightness. In addition, in order to enhance the on- versus off-state sequential image contrast of the projection system, a moderately low magnitude linear retarder is typically placed before each microdisplay panel to compensate for residual birefringence of the microdisplay panel in the off-state. As is well known in the art, this residual off-state birefringence typically leads to off-state leakage, which manifests as a bright dark-state that is very obvious when displaying dark video content, and which significantly lowers the on-state/off-state contrast ratio. The use of a moderately low magnitude linear retarder to compensate for the even lower magnitude residual off-state birefringence of the display panels provides contrast compensation has been shown to significantly improve the contrast ratio.

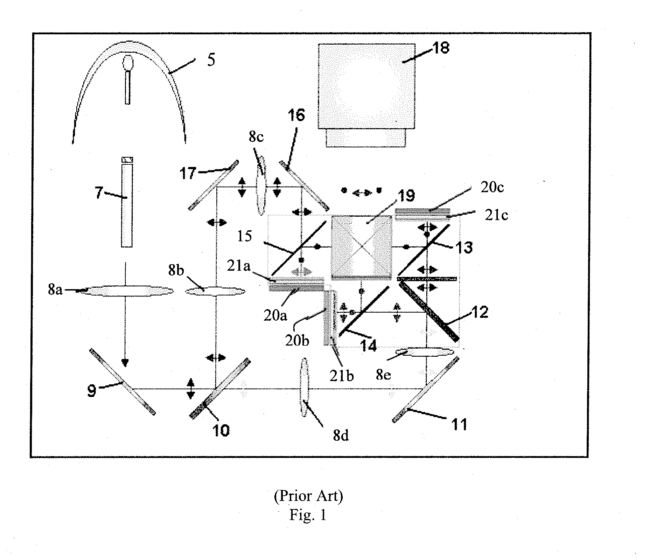

For example, consider the conventional 3-panel WGP-based LCoS microdisplay projection system shown in Fig. 1. The projection system includes a light source 5, which for example is a high-pressure discharge lamp, and a light rod 7. The light rod 7 homogenizes the cone of light produced by the light source 5 to ensure a spatially uniform light distribution. Optionally, the light rod 7 is a polarization conversion light pipe (PCLP) for producing linearly polarized light. A first lens 8a passes the light from the light pipe 7 to a first folding mirror 9, which directs the light to a first dichroic filter 10. The dichroic filter 10 separates out the blue light from the remaining light, and directs the blue light via second 8b and third 8c lenses, and second 17 and third 16 folding mirrors to a first LCoS display panel 20a. The remaining light, which is transmitted through the dichroic filter 10, is directed via fourth and fifth lenses 8d and 8e and a fourth folding mirror 11 to a second dichroic filter 12. The second dichroic filter 12 separates the remaining light into green and red light, the former of which is directed to a second LCoS display panel 20b and the latter of which passes to a third LCoS display panel 20c. Prior to reaching each LCoS display panel 20a, 20b, and 20c, the incident light first passes through a WGP 15, 14, and 13 and a moderately low magnitude linear retarder 21a, 21b, and 21c, respectively.

Each WGP 15, 14, and 13 is a polarizer/analyzer formed from a plurality of parallel micro-wires that transmits light having a polarization orthogonal to the direction of the parallel micro-wires and reflects light having a polarization parallel to the direction of the wires (e.g., if the polarizers are designed to pass horizontal or P- polarized light, as illustrated in Fig. 1, the micro-wires will be perpendicular to the plane of Fig. 1). Each LCoS panel 20a, 20b, and 20c alters the polarization of the linearly polarized incident light pixel-by-pixel and reflects the modulated light back to the corresponding WGP 15, 14, and 13. Since each WGP 15, 14, and 13 is orientated at approximately ±45° with respect to the principal direction of light propagation, in addition to serving as a polarizer/analyzer, each WGP 15, 13 and 14 also serves as a beamsplitter for separating the incoming light from the outgoing light by steering or deflecting the light reflected from the each LCoS panel along an output optical path orthogonal to the incoming optical path. More specifically, each WGP 15, 14, and 13 reflects S-polarized light (e.g., polarized light rotated by 90° by pixels in an ON state) to the X-cube 19. The X-cube 19 aggregates (i.e., converges) the image from each of the three color channels and, via the projection lens 18, projects the final image onto a large screen (not shown). Optionally, each color channel further includes a pre-polarizer (not shown) and/or a clean-up analyzer (not shown), which for example, may include one or more WGPs and/or dichroic sheet polarizers.

As discussed above, the moderately low magnitude linear retarders 21a, 21b, and 21 c, are compensating elements used to improve the contrast performance level of the projection system, which is otherwise limited by the residual birefringence of the LCoS panels in the dark (e.g., off) state. For example, in the absence of the moderately low magnitude linear retarders 21a-c, the P-polarized polarized light that illuminates each microdisplay panel in the off-state is slightly elliptically polarized upon reflection due to the residual birefringence of the LCoS panels 20a-c. When the elliptically polarized light, which contains both a P- and an S- component, is transmitted to the corresponding WGP 15, 14, 13, the S component is reflected to the X-cube thus allowing dark state light leakage onto the large screen and limiting the contrast of the projection system.

Use of the moderately low magnitude linear retarders 21a-c improves the contrast level by providing in-plane retardance that compensates for the retardance resulting from the residual birefringence in the LCoS panels 20a-c. In particular, each moderately low magnitude linear retarder 21a, 21b, and 21 c introduces a phase retardance that cancels the linear retardance resulting from the inherent birefringence of the corresponding LCoS panel. In general, the term "in-plane retardance" refers to the difference between two orthogonal in-plane indices of refraction (at a predetermined wavelength) times the physical thickness of the optical element. Since each low magnitude linear retarder 21a, 21b, and 21 c is required to provide a predetermined amount of in-plane retardance, they are often configured as A-plates (i.e., an optical retardation element having its extraordinary axis oriented parallel to the plane of the plate). For a vertically aligned nematic (VAN) LCoS panel the linear retardance resulting from the inherent birefringence in the off-state is approximately 2 to 5nm across the entire visible band. Accordingly, the moderately low magnitude linear retarders 21a, 21b, and 21c are typically required to exhibit approximately 10nm to 20nm A-plate retardance. Since the moderately low magnitude linear retarders 21a, 21b, and 21c are used to provide this relatively low magnitude linear retardance they often termed trim retarders.

Notably, these trim retarders 21a-c are typically oriented such that their slow axes are configured at approximately orthogonal azimuthal alignment to the slow axes of the LCoS panels 20a-c (i.e., termed "crossed axes" configuration), while their fast axes are configured at approximately orthogonal azimuthal alignment to the fast axes of the LCoS panels 20a-c. The terms slow axis (SA) and fast axis (FA), as used herein, refer to the two orthogonal birefringent axes when the linear retardance is measured at normal incidence. Notably, the SA and FA locations change with off-axis illumination as well as reversing the SA/FA roles for a negative out-of-plane retardance component at a large angle of incidence.

Since the slow axes of the trim retarders 21 a-c and the slow axes of the LCoS panels 20a-c are configured at orthogonal azimuthal orientations, the role of the fast/slow axes switches from the trim retarder 21a-c to the LCoS panel 20a-c for normal incidence light. In other words, light having a specific polarization is alternately delayed more then less, or vice-versa, in the trim retarder 21a-c and the LCoS panel 20a-c, respectively. If the linear retardance of each trim retarder 21a-c matches the linear retardance of the corresponding LCoS panel 20a-c in the off-state, the net effect is zero relative delay for the incoming polarization, and as a result, an unchanged polarization (i.e., the output light is not elliptically polarized). The corresponding WGP 15, 14, 13 and/or optional clean-up polarizer then rejects the output light so that the dark-state panel leakage does not appear on the screen. Since the trim retarders 21a-c do not alter significantly the throughput of the panel on-state, the resulting sequential contrast (full on/full off) is excellent.

While each trim retarder 21a-c should, in theory, provide a linear retardance that matches the linear retardance of the corresponding LCoS panel 20a-c in the off-state, in practice, the linear retardance of both the LCoS panels 20a-c and the trim retarders 21a-c tends to vary within each component due to manufacturing tolerances in device thickness and material birefringence control, as well as operational drifts (temperature, mechanical stress etc). As a result, it is more common to provide a trim retarder that exhibits a higher linear retardance than the residual off state retardance exhibited by the corresponding LCoS panel to ensure adequate compensation. For example, a trim retarder with a linear retardance of 5 nm (at $\lambda$ = 550 nm) could be provided to compensate for a vertical aligned nematic (VAN) LCoS exhibiting 2 nm of linear retardance at normal incidence (at $\lambda$=550 nm).

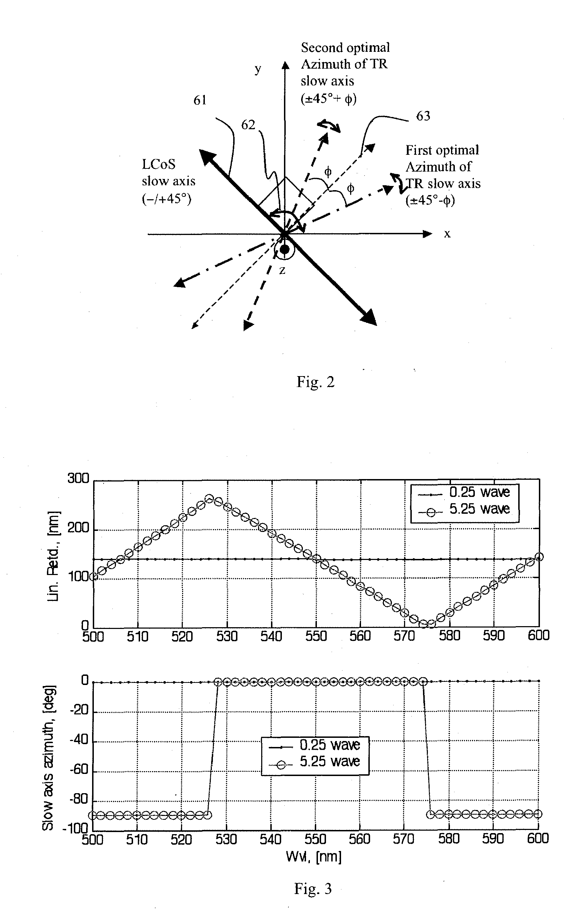

As is known to those skilled in the art, this mismatch in linear retardance requires offsetting of the optic axis of the trim retarder 21a-c, relative to the nominal crossed axes configuration described above. In other words, the trim retarder is mechanically 'clocked-in' by rotating its azimuth orientation away from the crossed-axes configuration until an increase in the contrast ratio is experimentally observed. This practical assembly is shown in Fig. 2. The LCoS slow-axis is represented by the dark arrow 61 in the second quadrant, with an azimuthal angle of 62, relative to the +X-axis (Right-hand XYZ coordinate system, RH-XYZ). The slow axis of the panel is typically oriented to be substantially parallel to the bisector of the S- and P- axes, which is important if the VAN-LCoS panel is to be used as an efficient electrically-controlled birefringence (ECB) device. The trim retarder has its slow-axis aligned in the neighboring quadrant. In the un-clocked position, the slow axis 63 bisects the S and P polarization axes (i.e., slow axis at $\pm$ 45° and $\pm$ 135°, when P-polarization is parallel to 0°/180° and S-polarization is parallel to $\pm$ 90°). After clocking, the slow axis is shown to be rotated by approximately $\pm$ 22° (e.g., rotated about the z-axis, $\phi_{cl}$=22°).

Various technologies have been used to fabricate trim retarders. For example, some examples of materials used to form trim retarders include uniaxially stretched polymer films such as polyvinylalcohol (PVA) or polycarbonate (PC) films, uniaxially aligned films of liquid crystal polymer (LCP) material, non-tilted biaxial organic foils such as cellulose acetate, molecularly birefringent inorganic crystals, and inorganic thin films.

In much of the prior art, trim retarders are fabricated as true zero-order trim retarders. For example, trim retarders are often fabricated from polymer films that have been stretched to provide a relatively low magnitude retardance. However, for materials having a relatively high birefringence, such as some inorganic crystals and/or LCP materials, forming a true zero-order retarder is challenging. For example, in order to fabricate a zero-order trim retarder having about 10 nm of linear retardance in the visible region, a quartz wave plate (configured as an A-plate, and having a birefringence's of 0.009 at 550 nm) would need to be approximately 1.1 microns thick. Even a similar quartz plate configured as a zero-order quarter-wave plate would require a thickness of 10-20 microns. In practice, it is very difficult to polish birefringent crystal plates to physical thicknesses less than about 100 microns (e.g., they are too thin for easy fabrication and handling).

One approach to fabricating a moderately low retardance trim retarder with materials having a high birefringence is to use a dual-layer configuration. For example, in one embodiment two birefringent crystal plates having different magnitudes of linear retardance are oriented in a crossed-axes configuration to form a pseudo zero-order retarder. In fact, commercial quarter-wave plates are often fabricated by laminating two quartz plates having their slow axes oriented substantially orthogonal to each other, wherein the difference in thickness of the two plates provides zero-order quarter-wave retardance. In other embodiment, two birefringent crystal plates having the same retardance (e.g., two half-wave plates) are oriented at a non-90 degree relative azimuthal angle offset to form a pseudo zero-order retarder. Unfortunately, both of these embodiments require an increased number of components and thus, are associated with increased manufacturing costs. In addition, there is also increased cost related to the required relative alignment.

Another approach to providing a moderately low retardance is to a use multiple-order trim retarder. For example, a tenth-order quarter-wave retarder (e.g., 5.25 waves) should behave similarly to a zero-order quarter-wave retarder (e.g., 0.25 wave). Although calculations have shown that clocking characteristics of multiple order retarders may be similar to their zero-order counterparts, they are not generally ideal for trim retarder applications due to their high dispersion. For example, consider the theoretical linear retardance (at normal incidence) as a function of wavelength of a 0.25 waves quartz retarder and a 5.25 waves quartz retarder, illustrated in Fig. 3. Even assuming that the quartz retarders are utilized in the green-band (e.g., instead of the entire visible band), the simulated results clearly indicate that the net retardance of the multiple-order quarter-wave plate does not allow for optimal contrast compensation beyond the design wavelength. In fact, even a first-order quarter-wave plate (i.e., 0.75) is expected to have a relatively large retardance dispersion (not shown). Notably, a large retardance dispersion means that not all wavelength channels within the given band can be compensated adequately by a common retarder slow-axis alignment relative to the LCoS slow-axis and system S- and P-planes.

In US Pat. No. 5,576,854 to Schmidt et al, contrast compensation is provided with an approximately quarter-wave retarder (e.g., 0.27 waves). More specifically, quarter-wave retardance (e.g., 0.25) is used to compensate for skew ray depolarization of the MacNeille polarization beam-splitter (PBS), while the additional retardance above a quarter-wave (e.g., 0.02 wave) is used to compensate for birefringence in the LCD panel. Unfortunately, since compensator requirements for WGP-based polarization beam-splitting devices can differ significantly from those based on a MacNeille PBS, this approach has not provided a successful solution to contrast compensation in WGP-based LCoS microdisplay projection systems. In fact, in US Pat. No. 6,909,473, it is stated that performance results indicate that the use of the approximately one quarter-wave plate compensator can even degrade contrast ratio in WGP-based LCoS microdisplay systems.

In WO 01/79921 A2, Candee et al also propose using a quarter-wave plate to provide skew ray compensation of the MacNeille PBS prisms. In addition, Candee et al propose two different embodiments for compensating residual off-state birefringence in the reflective panel. In the first embodiment, the above-mentioned quarter-wave plate is slightly misaligned. In a second embodiment, an additional quarter-wave plate or an additional half-wave plate is misaligned. More specifically, the orientation of the second quarter-wave plate or half-wave plate is slightly rotated from the principal coordinate plane of the imager panel (also S- and P-plane of the optical system). Notably, this approach is also not expected to provide a successful solution to contrast compensation in WGP-based LCoS microdisplay systems. For example, as discussed above, the use of a quarter-wave plate is associated with poor performance in WGP-based LCoS microdisplay systems, whereas the use of a half-wave plate is expected to cause the panel on-state brightness to decrease such that the resulting sequential contrast (full on/full off) is negatively affected and system throughput degraded. In addition, aligning the second half-wave plate to approximately half the angle offset of a second quarter-wave plate from the S- or P-axis does not work.

In would be advantageous to provide an improved trim retarder for WGP-based LCoS microdisplay systems.

## SUMMARY OF THE INVENTION

The instant invention relates to contrast compensation in liquid crystal display (LCD) projector systems, where the LCD exhibits small magnitude residual in-plane retardance in the off state. The contrast compensation is provided with a near zero-order half-wave retarder. Advantageously, the near half-wave retarder delivers optimal dark-state crossed polarization output without appreciably degrading the on-state, in WGP-based LCoS projection systems. Furthermore, the near half-wave retarder is readily fabricated using a single-layer birefringent crystal with a manageable thickness tolerance. In addition, the near half-wave retarder exhibits an angular sensitivity comparable to prior art small magnitude trim retarders.

In accordance with one aspect of the instant invention there is provided a liquid crystal display projection system comprising: a reflective liquid crystal display panel having residual off-state birefringence at a predetermined wavelength; and a trim retarder for compensating for the residual off-state birefringence of the reflective liquid crystal display panel and for increasing an on-state/off-state contrast ratio of the liquid crystal display projection system, wherein the trim retarder includes a single-layer retarder element having an in-plane retardance for compensating for an in-plane component of the residual off-state birefringence, the in-plane retardance shifted from a half-wave at the predetermined wavelength by a predetermined amount, the predetermined amount less than about 0.15 wave at the predetermined wavelength.

In accordance with one aspect of the instant invention there is provided a method of improving contrast ratio in a liquid crystal display projection system, the method comprising: providing a trim retarder for compensating for residual off-state birefringence of a reflective liquid crystal display panel in the liquid crystal display projection system, the trim retarder including a single-layer retarder element having an in-plane retardance for compensating for an in-plane component of the residual off-state birefringence, the in-plane retardance shifted from a half-wave at the predetermined wavelength by a predetermined amount, the predetermined amount less than about 0.15 wave at the predetermined wavelength.

In accordance with another aspect of the instant invention there is provided a method of improving contrast ratio in a liquid crystal display projection system, the method comprising: determining a residual off-state retardance of a reflective liquid crystal display panel in the liquid crystal display projection system; determining a first in-plane retardance for compensating for the residual off-state retardance and for increasing an on-state/off-state contrast ratio of the liquid crystal display projection system; and positioning a trim retarder in the liquid crystal display projection system, the trim retarder including a single-layer retarder element having a second in-plane retardance, the second in-plane retardance substantially equal to one of a half-wave plus the first in-plane retardance and a half-wave minus the first in-plane retardance, the first and second in-plane retardances determined at a same wavelength in a visible region of the electromagnetic spectrum.

## BRIEF DESCRIPTION OF THE DRAWINGS

Further features and advantages of the embodiments of the instant invention will become apparent from the following detailed description, taken in combination with the appended drawings, in which:

FIG. 1 is a schematic diagram of a prior art 3-panel WGP-based LCoS projection light engine;

FIG. 2 is a schematic diagram showing the relative azimuthal orientations of the LCoS panel and the trim retarder slow axes;

FIG. 3 is a plot showing simulated linear retardance and retarder axis as a function of wavelength for a prior-art quarter-wave retarder and its multiple-order counterpart;

FIG. 4 is a schematic diagram illustrating the general retarder solutions space for enhancing the contrast of an LCoS panel;

FIG. 5 shows panel in-plane retardance inferred from normalized reflectance measurements at λ=550nm;

FIG. 6 shows the normalized reflectance spectra for a retarder compensated VAN-mode LCoS in the on-state (left plot) and off-state (right plot) at 550nm;

FIG. 7 shows the azimuthal angle sensitivity of the on-state transmission (top plot), off-state (middle plot), and the resultant contrast ratio (bottom plot) of a compensated VAN-mode LCoS panel at 550nm wavelength;

FIG. 8 is a plot of calculated panel contrast versus compensator slow-axis azimuthal orientations at 550nm for various retarders;

FIG. 9 is a plot of calculated linear retardance versus wavelength for various retarders in the green channel;

FIG. 10 is a plot of calculated retarder/panel contrast with ideally clocked retarders;

FIG. 11 shows the simulated contrast for various retarder layer thickness;

FIG. 12 shows the simulated contrast spectra for a fixed 0.1 degree de-tuning from optimal contrast point;

FIG. 13a is a plan view of a trim retarder used for contrast compensation in a WGP-based LCoS microdisplay system in accordance with one embodiment of the instant invention; and

FIG. 13b is a perspective view of FIG. 13a.

It will be noted that throughout the appended drawings, like features are identified by like reference numerals.

## DETAILED DESCRIPTION

In order to provide an improved trim retarder for a WGP-based LCoS microdisplay system it is necessary to look at some of the preferred characteristics of trim retarders. Ideally, a trim retarder should be able to (a) deliver extremely low crossed-polarization leakage in the light off-state; (b) deliver nearly unchanged crossed-polarization output in the light on-state of the compensated panel versus uncompensated panel; (c) exhibit good mechanical clocking sensitivity for the initial alignment (i.e., when clocking is required) and for long-term alignment drift; (d) provide a high contrast ratio of on-state intensity versus off-state intensity over a given red, green, blue band or the entire visible wavelength band; and (e) exhibit good retardation magnitude and orientation uniformity.

Moreover, in addition to providing in-plane retardance, it may be advantageous for the trim retarder to provide out-of-plane retardance. While in-plane retardance is typically provided with an A-plate (i.e., an optical retardation element having its extraordinary axis oriented parallel to the plane of the plate), out-of-plane retardance is typically provided with a C-plate (i.e., an optical retardation element having its extraordinary axis oriented perpendicular to the plane of the plate). While a C-plate does not provide any net retardation for normal-incident rays (i.e., normal incident light is unaffected by the birefringence), rays incident off-axis (i.e., at an angle to the extraordinary axis) experience a net retardation that is proportional to the incident angle. Accordingly, out-of-plane retardance is typically provided to increase the field of view ofLCoS panels. A C-plate is considered to be positive if the retardance increases with angle of incidence and negative if the retardance decreases with angle of incidence. Alternatively, a C-plate is considered to be negative if the retardance product $\Delta nd$ is negative (e.g., if $n_e$-$n_o$ is negative). Since vertically aligned nematic (VAN)- mode LCoS panels typically function as +C-plates, it is common for the corresponding trim retarders to include both an A-plate component for compensating for the residual off-state in-plane retardance (i.e., A-plate retardance) and a -C-plate component for compensating for negative out-of plane retardance (i.e., -C-plate retardance). The resulting full-function trim retarders are conveniently termed A/-C-plate trim retarders.

As discussed above, there are a few materials that can be used to provide an A-plate retardance suitable for contrast compensation of WGP-based LCoS microdisplay systems, and which largely meet the above requirements. For example, trim retarders providing 10 to 30nm retardance within the visible wavelength band have been fabricated using various deposition methods. These thin-layer structures have been shown to provide high contrast results over wideband while maintaining good azimuthal insensitivity to clocking. Another material that shows very high potential for fabricating trim retarders is molecularly birefringent inorganic crystal. The use of inorganic birefringent crystal in high light flux projector applications, such as digital cinema projection, is advantageous due to its high durability and/or stable birefringence when exposed to high light flux conditions. Unfortunately, since current grinding and polishing techniques are incompatible with providing birefringent crystals with low to moderate zero-order retardances, unless used in a dual-layer configuration, their use as trim retarders has not been established.

In accordance with one embodiment of the instant invention, a trim retarder fabricated from a relatively high birefringent material (e.g., a birefringent inorganic crystal or LCP layer) configured as an approximately half-wave plate (HWP) is used for contrast compensation of a WGP-based LCoS microdisplay system. Since the trim retarder is designed to provide approximately half-wave retardance in the visible region of the electromagnetic spectrum, the trim retarder is easier to fabricate and/or handle. In addition, since the trim retarder provides approximately zero-order half-wave retardance (i.e., is not a multi-order retarder) it is not highly dispersive across the red, green, and/or blue bands (i.e., it is not associated with a large dispersion in the visible region).

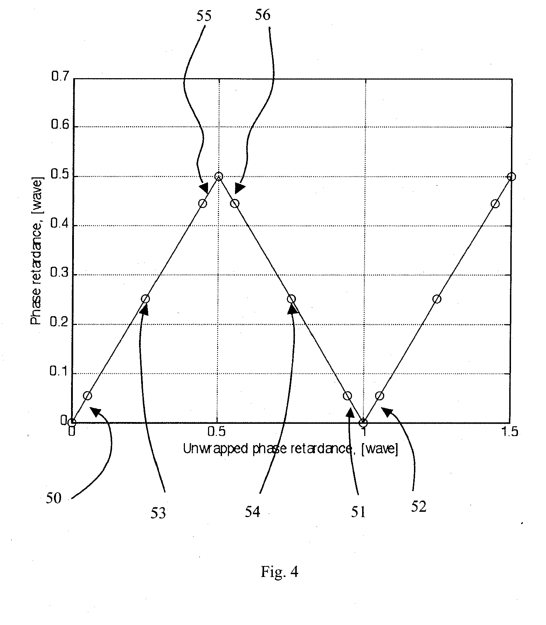

In order to further understand the use of the approximately half-wave retarder as a trim retarder, consider the general retarder solutions space illustrated in Fig. 4. Referring to the figure, it is clear that an optical retarder will provide the equivalent of approximately 0.055 wave retardance if fabricated as a true zero-order retarder 50 (e.g., termed a birefringent contrast enhancer (BCEO)), a first-order retarder 51 (e.g., termed BCE1), or a second-order retarder 52 (e.g., termed BCE2). Note that a retardance of 0.055 wave is equivalent to a retardation of approximately 30nm if the incident radiation has a wavelength $\lambda$, equal to 550nm (e.g., a value highly suitable for compensating for the typical 2nm of off-state retardance of a VAN-mode LCoS panel used in the green band). Fig. 4 also shows the zero-order quarter-wave plate solution 53 (e.g., termed QWPO) and the first order quarter-wave plate solution 54 (e.g., termed QWP1). As discussed above, and again below, quarter-wave plate (QWP) solutions are not ideal for use in contrast compensation of WGP-based LCoS microdisplay systems. In addition, Fig. 4 shows solutions for two near half-wave plate retarders 55, 56. For illustrative purposes, the near HWP solution located in the zero-order retardation space 55 is termed HWP-minus (HWPm), whereas the solution located in the first-order retardation space 56 is termed HWP-plus (HWPp). In this example, both near HWP solutions 55, 56 have a difference of approximately 0.055 wave retardance from the HWP retardance (e.g., correspond to an approximately 0.45 or 0.55 wave plate).

In order to evaluate the off-state and on-state characteristics of a near half-wave trim retarder, the electro-optic (EO) curve is used. A VAN-mode LCoS panel was driven to a range of voltages (i.e., the on-state LCoS voltage was over 5V and the off-state voltage was 1.2V) and the normalized reflectance was converted to effective LCoS in-plane retardance. The measurement was performed for the Green band (e.g., 510 to 570nm) with a f/2.4 cone of light. As an approximation, the effective in-plane retardance was inferred at $\lambda$=550nm at normal incidence using

$$\frac{I_{(output\ crossed\ polarization)}}{I_{(input\ linear\ polarization)}} = \left[\sin(\frac{2\Delta nd}{\lambda}\pi)\sin(2\phi_p)\right]^2 \tag{1}$$

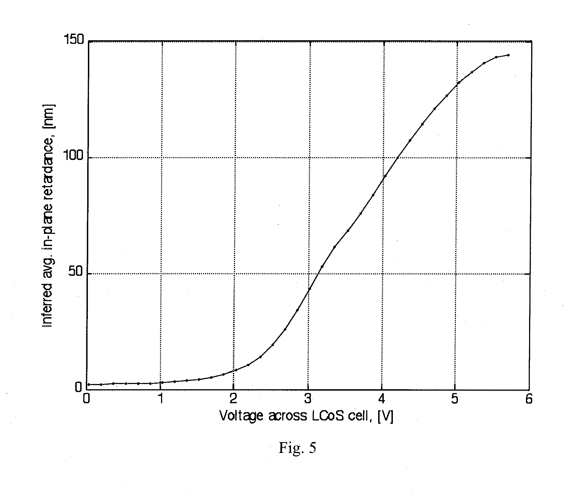

where $\Delta nd$ is the single-pass retardance of the VAN-LCoS panel at a given voltage, $\lambda$ is the illumination wavelength, and $\phi_p$ is the orientation of the slow-axis relative to the P-polarization (i.e., $\phi_p$=45 degrees). The inferred panel in-plane retardance is plotted in Fig. 5.

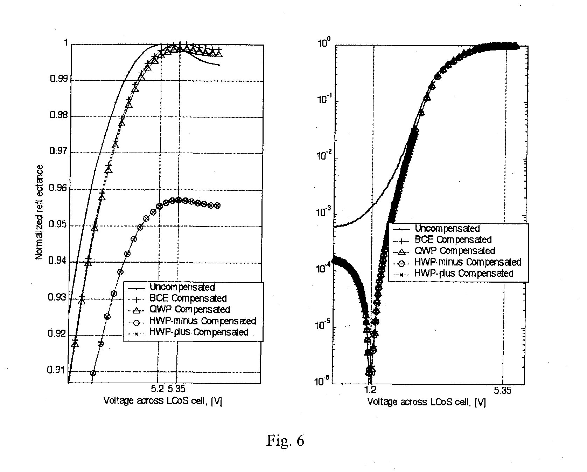

Referring to Fig. 6, the transmission of a compensated/uncompensated VAN-mode LCoS panel at $\lambda$=550nnm is shown for the on-state (e.g., the left plot) and the off-state (e.g., right plot). The compensated results were calculated using a BCE (e.g., BCE0) providing 30 nm retardance, a quarter-wave plate (e.g., QWPO) providing 137.5 nm retardance, a near half-wave plate (e.g., HWP-minus) providing 245 nm retardance, and a near half-wave plate (e.g., HWP-plus) providing 305 nm retardance. The uncompensated panel reflectance (double pass transmission) through a set of ideal crossed polarizers is shown by the solid curve with dot markers. The normalized off-state reflectance at approximately 0.135% gives an estimated contrast ratio of 740:1 for the uncompensated panel. With a small magnitude retarder compensated panel BCE, the dark-state leakage at the required voltage (e.g., 1.2V) is theoretically 0. In practice, the cone-effects and the non-ideal crossed-axes polarizers degrade the BCE-compensated VAN-mode panel to the system baseline contrast. Notably, the QWP, HWP-minus and HWP-plus retarders are shown to compensate for the panel off-state as well as the BCE retarder. The "notch" in the dark-state reflectance curves (e.g., at about 1.2 V) corresponds to the operating point for each of the retarder compensators.

The on-state reflectance of the uncompensated panel reaches a maximum value at about 5.2V voltage driving. With a BCE or QWP compensated panel system, the required voltage to reach the maximum reflectance is increased slightly (e.g., 5.35V). This can be optimized by Gamma correction found in typical panel operation. The use of either a HWP-minus or HWP-plus retarder compensator results in a slightly lower on-state maximum reflectance. In the case of a 30nm offset from the HWP condition, the throughput reduction is about 4.5% (e.g., reaches a normalized reflectance of about 95.5%). This lost of brightness is due to birefringence interaction of retarder/panel in the on-state and does not include the insertion loss of absorption and reflection due to the additional optical component.

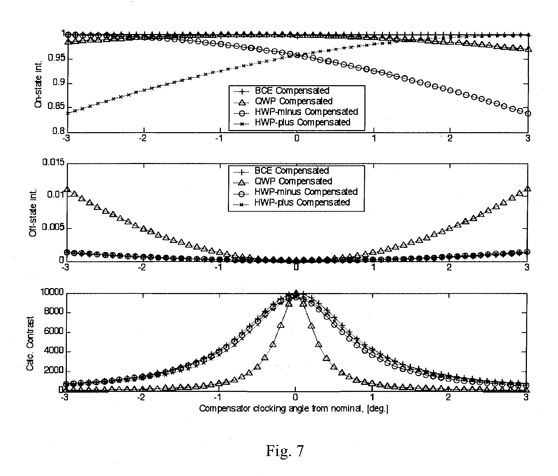

Since mechanical clocking of the trim retarder slow-axis versus the system 'S' and 'P' axes (and hence the panel slow-axis) is typically implemented for commercial LCD light engine assembly, one important characteristic of the trim retarder is the tuning range (e.g., the ideal trim retarder will have a relatively broad tuning range, or in other words, will exhibit good mechanical clocking insensitivity). Fig. 7 illustrates the azimuthal angle sensitivity of the on-state transmission (top plot), off-state transmission (middle plot), and the resultant contrast ratio (bottom plot) of the compensated VAN-mode panels at $\lambda$=550nnm. More specifically, Fig. 7 illustrates the calculated contrast ratio as a function of clocking angle from the optimally clocked trim retarder slow axis position (i.e., which is approximately 3 degrees for BCEO and HWP-minus, 1 degree for QWPO, and -3 degrees for HWP-plus for a 2nm VAN-panel retardance having a slow-axis oriented at 135 degrees).

Referring to the top plot, the BCE and QWP-compensated panels show a relatively flat and symmetric response to the clocking of the retarder slow-axis over $\pm3$ degrees, in the on state. Referring to the middle plot, the reflection of the QWP-compensated panel appears to change more with angular tuning, in the off-state. The resulting contrast tuning curves indicate that the BCE compensated panel provides about 1.7 degrees of FWHM (i.e., full-width half-maximum or 50% contrast bandwidth), whereas the QWP compensated panel only delivers about 1/3 as much contrast bandwidth (e.g., approximately 0.57 degree). In other words, the QWP-compensated light engine system is calculated to be 3X as sensitive to angular drift of the retarder element versus a BCE-compensated LCD system. This is a serious drawback. If fact, it is believed that one of the reasons that the prior art failed to provide quality contrast compensation with the approximately one quarter-wave retarder is the low mechanical angle tuning tolerance of the quarter-wave plate. In other words, a quarter-wave plate or near quarter-wave plate is extremely sensitive in its clocking behaviour.

In comparison to the BCE and the QWP, both the HWP-minus and HWP-plus retarder compensators are calculated to be slightly asymmetric in their response to the angular tuning in the light-on state. On the other hand, the off-state panel reflection for both the HWP-minus and the HWP-plus retarder compensators is nearly identically to the BCE/panel reflection. In fact, the associated contrast bandwidth for these two large magnitude retarders appears to be almost the same as the BCE-compensated LCD systems (e.g., at about 1.65 degree FWHM). In other words, these large magnitude retarders exhibit almost the same tuning sensitivity of a small magnitude BCE. Since the on-state light throughput of these large magnitude retarders is only a few percent worse than a corresponding BCE or QWP retarder compensated LCD system, it appears that it would be advantageous to use a HWP-minus or a HWP-plus retarder as a compensator for LCD panel rather than a QWP retarder, where the relative angular clocking of the retarder/panel is detuned by, for example, thermal drift of the optical assembly.

It is noted that as the compensator retardance exceeds the QWP magnitude and approaches that of a HWP, the optimal retarder axes (fast and slow) of the compensator begin to deviate from the S- and P-axes even more. This is contrary to what is taught in WO 01/79921 A2, wherein the HWP axes are closer to the S- and P-axes than the QWP retarder axes. In the reflective LCoS projection system described herein, the QWP retarder compensator is double-passed, yielding a half wave net retardance upon reflection. Consequently, this QWP retarder has to be aligned with a small angular offset from either the P- or S-axis. This yields a small fraction of the half wave retardance upon double-pass transmission as the effective retardance to compensate for the small magnitude panel residual retardance. When the retarder compensator is slightly higher magnitude than a QWP in single pass, the double-pass retardance is larger than half-wave. In order to produce the same effective retardance for panel compensation, the deviation angle of the retarder compensator, having a retardance higher than a QWP but less than a HWP in single pass, from the P- or S-axis has to be increased.

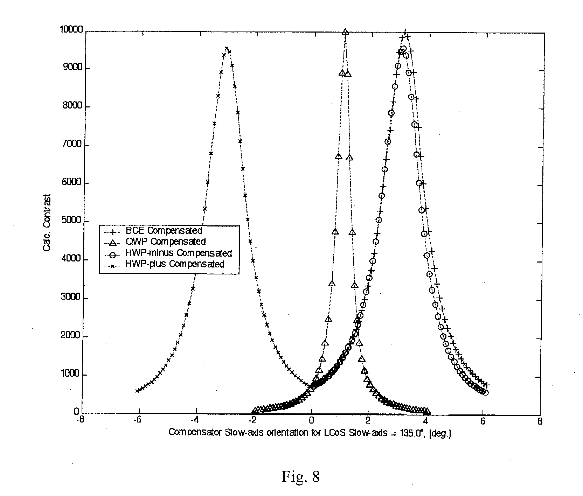

Fig. 8 shows the calculated panel contrast at 550 nm plotted against the slow-axis azimuthal orientation of the trim retarder (e.g., referenced to a common X-axis, counterclockwise (CCW) being positive azimuthal angles), when the slow axis of the VAN-mode LCoS panel is located at 135 degrees. More specifically, Fig. 8 shows contrast tuning versus the retarder compensator slow axis referenced to a common X-axis. The small magnitude compensator BCE, which has 30nm of retardance at 550 nm, has an optimal axis alignment at approximately 3 degrees (i.e., the clocking angle was -42 degrees). The HWP-minus compensator (HWP-30nm) shows approximately the same optimal axis alignment as the small magnitude compensator BCE. The QWP compensator has its slow/fast axes aligned closest to a first polarization axis (e.g., P-polarization), giving rise to the most severe clocking sensitivity. The HPW-plus has its optimal axes aligned in the same (or diagonally opposite) quadrant as the LCoS slow-axis, which follows naturally from the first-order wave plate effect. It's also noted that there are other optimal slow axis orientations (e.g., local contrast maxima or minima) which are orientation angles mirrored about the ±45 degree axis to those shown in Fig. 8. In these other cases, the optimal contrast maxima points are in the neighbourhood of a second polarization axis (S-polarization, or Y-axis).

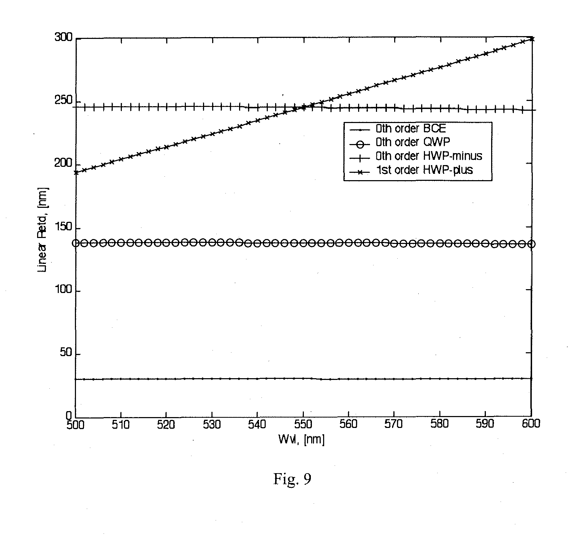

The calculated linear retardance of the four compensators (e.g., BCE, QWP, HWP-minus, and HWP-plus) in the green channel are shown in Fig. 9. The HWP-plus retarder, which is in the first-order retardation region, has a retardance spectrum (phase retardance shown wrapped to zero order) that has a steeper slope than the three zero-order retarders. On the other hand, the linear retardance spectra of the three zero-order retarders, show that the compensation efficacy of each across 100 nm in the Green band is within 1.5% of the highest contrast. In fact, a panel compensated by a BCE or a QWP has a contrast spectrum that is practically flat. Notably, the HWP-minus and HWP-plus retarders delivered about 1.5% lower contrast at the green band edge (e.g., ±50 nm from design wavelength).

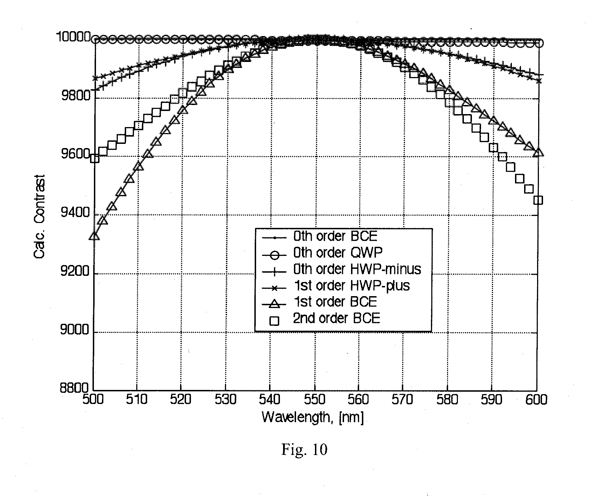

The calculated contrast ratio of a VAN-mode LCoS panel compensated with an optimally clocked retarder (i.e., for maxima contrast illustrated in Fig. 8) are shown in Fig. 10. Note that the contrast spectra of a panel compensated using a first order BCE (e.g., BCE1) and a second order BCE (e.g., BCE2) are also shown in the same plot. The dispersion of the large compensator retardance near a full-wave plate and the panel retardance in this case results in some 7% contrast degradation at the band edges, but is not as large as the dispersion for the BCE1 and BCE2. In fact, it appears that the large magnitude retarders (e.g., HWP-minus and/or HWP-plus) do not cause appreciable contrast degradation across a typical visible wavelength channel compared to the small magnitude BCE retarder.

Notably, while the large magnitude retarder compensators (e.g., HWP-minus and/or HWP-plus) do provide somewhat reduced contrast compensation relative to the BCEO and QWPO compensators (e.g., see Fig. 8), they are not as sensitive to clocking angle as the QWPO compensator (e.g., see Fig. 7). While the small magnitude retarder BCEO provides high contrast compensation and a good clocking sensitivity, as discussed above, it is typically limited to being fabricated with low birefringence materials or fabricated by deposition and/or stretching techniques.

Advantageously, the large magnitude retarders (e.g., HWP-minus and/or HWP-plus) are readily fabricated as a zero-order retarders using materials having high birefringence. Accordingly, the approximately half-wave retarders can be fabricated from inorganic birefringent crystals, such as quartz, which is known to be durable and stable in high light flux conditions. In addition, current grinding and polishing techniques can be used to fabricate the approximately half-wave crystal plate, as a zero-order retarder, with reasonable thickness tolerance.

Notably, the thickness tolerance of a zero-order approximately half-wave quartz retarder is much higher than a small magnitude retarder BCEO fabricated with a single-layer quartz structure. For example, by assuming a quartz layer thickness tolerance of ±3% (including ±3σ range), the required thickness variation lies within ±0.1 μm for the small magnitude BCEO quartz retarder. On the other hand, the Γ=245nm HWP-minus and Γ=305nm HWP-plus single-layer large magnitude quartz retarder will have approximately ±0.8μm and ±1μm thickness tolerance (assuming the same ±3% thickness tolerance and nominal targeting). Hence, it can be expected that the single-layer large retarder tolerance is some 8X to 10X better than the small magnitude zeroth order BCE retarder.

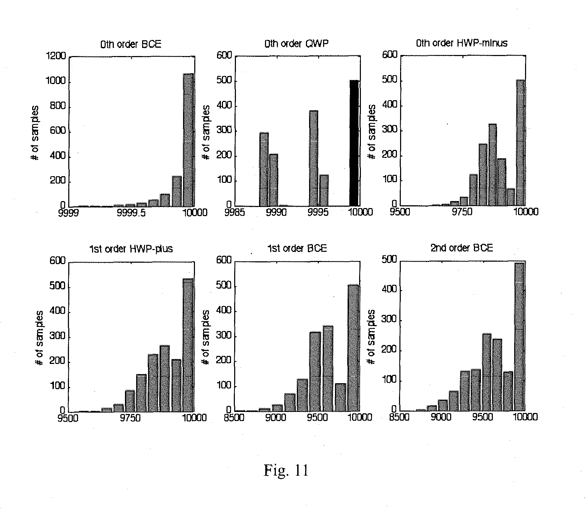

Fig. 11 illustrates the tolerance of 3% thickness for the various retarders. For each plot, the contrast was simulated for 500 normally distributed thickness values (±3%) at three different wavelengths in the green band (e.g., 500nm, 550nm, and 600 nm). Since the Γ=30nm BCE retarder has a flat contrast response versus wavelength (e.g., see Fig. 10), its 1500 thickness values generated at random (with a normal distribution) result in contrast values close to the nominal 10,000:1 (e.g., the maximum system contrast). The QWP retarder with ±3% thickness variation delivers near the optimal contrast but there are three distinct bands corresponding to the wavelength placement. The use of HWP-minus and HWP-plus with $\pm 3\%$ thickness tolerance has been simulated to provide at least 95% of the optimal contrast. In comparison, two other large retarders, first and second order BCE, yield up to 15% contrast degradation with the same $\pm 3\%$ thickness tolerance. Notably, the $\pm 3\%$ thickness tolerance of the HWP-minus and HWP-plus retarders provides acceptable contrast variations, and also provides an absolute physical thickness tolerance at approximately $\pm 0.8\mu m$ to $\pm 1.0\mu m$, which is manageable by micro-fabrication techniques.

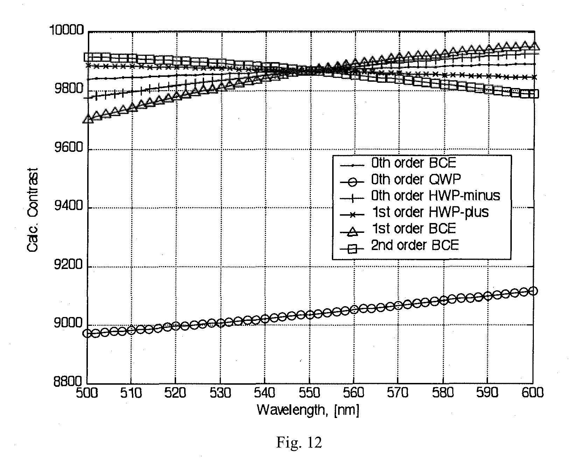

Further advantageously, the large magnitude HWP-minus and HWP-plus retarders provide good tuning angle sensitivity. In particular, the angular tuning characteristics are comparable to the BCE0. For example, consider the modeled contrast spectra of a compensated VAN-mode LCoS panel illustrated in Fig. 12, when the retarder/panel slow-axes are de-detuned by a mere 0.1 degree from the optimal contrast point (i.e., the retarder slow-axis is clocked by a fixed 0.1 degrees). In these calculations the VAN-mode LCoS panel exhibits an off-state retardance of 2 nm at 550nm. It can be seen that a display panel compensated with the BCE, HWP-minus and HWP-plus retarders incur an approximately 1% to 2% contrast degradation from the optimal contrast point under this clocking condition. On the other hand, the contrast of a display panel compensated with the QWP retarder drops by about 9% to 10% over the Green band. When the retarder/panel slow-axes are de-detuned by a 0.2 degree, the BCE, HWP-minus and HWP-plus retarders incur an approximately 5% contrast degradation, whereas the QWP retarder incurs an approximately 30% drop.

Clearly, while a small magnitude retarder such as BCE0 is ideal for compensating the residual off-state panel retardance of an LCoS panel in terms of contrast and azimuthal angle sensitivity, the near half-wave retarders (e.g., HWP-minus and/or HWP-plus) offer a reasonable compromise between contrast, azimuthal angle sensitivity, and suitable materials/fabrication techniques. In particular, the near half-wave retarder substantially maintains the contrast tuning insensitivity of the BCE and allows for a large thickness tolerance with an acceptable on-state throughput loss of a few percent. For a high flux panel system, where grinding and polishing of solid birefringent crystals is utilized to fabricate the retarder compensators, the near HWP retarder is the most cost-effective and delivers the required high contrast performance similar to the BCE0. In addition, by utilizing a single retarder layer, the overall system contrast is not impaired by the presence of circular retardance, which is typically found in multi-layer angularly-offset retarder compensator.

Notably, in these calculations, the simulation used single-crystal quartz material dispersion models for ($n_e$, $n_o$) indices for the trim retarder and a typical LC model for the LCD panel. Of course, practical trim retarders may be implemented with a variety of technologies having a variety of dispersive properties.

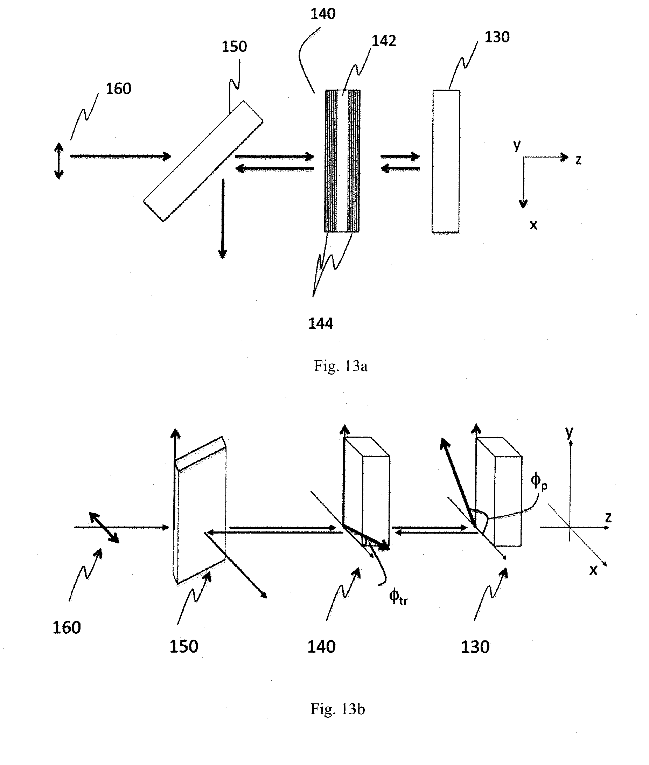

Referring to Fig. 13a, there is shown a trim retarder for compensating a VAN-mode LCoS panel in accordance with one embodiment of the instant invention. The trim retarder 140 is optically disposed between a WGP 150 and the VAN-mode LCoS panel 130, which are arranged such that the WGP 150 passes horizontal or P-polarized light 120, and such that the trim retarder 140 and the VAN-mode LCoS panel 130 are substantially plane parallel.

Referring to Fig. 13b, the slow axis of the VAN-mode LCoS panel 130 is oriented such that it substantially bisects the S- and P-axes of the system. Orienting the slow axis of a VAN-mode LCoS panel at $\pm 45$ degrees to the S- and P-axes is important if the VAN-mode LCoS panel is to be used as an efficient electrically controlled birefringence (ECB) device, and if the VAN-mode LCoS panel is to function approximately as a quarter-wave plate retarder in single pass when the panel is in the on-state. In this embodiment, the slow axis of the VAN-mode LCoS panel is disposed in the second quadrant at a first azimuthal angle $\phi_p$, which is approximately 135 degrees from the x-axis in a left-handed XYZ coordinate system. In other embodiments, the slow axis of the VAN-mode LCoS panel is in one of the other quadrants such that it substantially bisects the S- and P- system axes.

Referring again to Fig. 13b, the slow axis of the trim retarder 140 is shown to be in the first quadrant at a second azimuthal angle (i.e., $\phi_{tr}$) to the x-axis. More specifically, the slow axis azimuth of the trim retarder is oriented at an angle $\phi_{tr}$ experimentally determined to provide the maximum contrast ratio (e.g., is an optimally clocked angle). Since the trim retarder slow axis azimuthal angle $\phi_{tr}$ is shown to be in the first quadrant close to the P-polarization axis, it is clear that the trim retarder is a near half-wave plate wherein the linear retardance is shifted lower than a half-wave by a predetermined amount (e.g., HWP-minus). Alternatively, a near half-wave plate wherein the linear retardance is shifted lower than a half-wave by a predetermined amount (e.g., HWP-minus) could have its slow axis azimuthal angle $\phi_{tr}$ in the first or third quadrant close to the S-polarization axis. On the other hand, if the trim retarder was a near half-wave plate wherein the linear retardance is shifted above a half-wave by a predetermined amount (e.g., HWP-plus), then the optimal trim retarder slow axis azimuthal angle $\phi_{tr}$ would be typically in the fourth quadrant close to the P-polarization axis. Alternatively, a near half-wave plate wherein the linear retardance is shifted above a half-wave by a predetermined amount (e.g., HWP-plus) would have its slow axis azimuthal angle $\phi_{tr}$ in the second or fourth quadrant close to the S-polarization axis.

The trim retarder 140 includes a first retarder element 142 that has approximately half wave retardance. The difference in retardance between a true zero-order half-wave plate and the first retarder element 142 is selected to provide a retardance magnitude suitable for contrast compensation of the LCoS panel 130. In general, the difference in retardance will be between about 0.005 wave and 0.15 wave of the wavelength of interest, which if the trim retarder is used at 550 nm, corresponds to a linear retardance between 2 nm and 82 nm. More typically, the trim retarder will be required to provide between 10 and 40 nm of in-plane linear retardation (i.e., which, at 550 nm, corresponds to a retardance of about 0.02 wave and 0.07 wave). For example, in one embodiment the difference in retardance is approximately 0.055 waves, which at 550 nm corresponds to a retardance of approximately 30 nm. This retardance value is highly suitable for providing contrast compensation of a VAN-mode LCoS panel that exhibits an off-state panel retardance of approximately 2 nm at $\lambda$=550nm. Note that when the difference in retardance from HWP is approximately 0.055 wave, the first retarder element 142 will have a retardance of either 0.455 or 0.555 wave.

The first retarder element 142 is typically formed as a single-layer retarder element using a relatively high birefringence material, such as molecularly birefringent inorganic crystal or LCP, which can function as an A-plate. For example, in one embodiment the first retarder element 142 is fabricated as a near half-wave quartz retarder. In this embodiment, the quartz layer will be self supporting or will be supported with a transparent substrate. In each case, the quartz layer will be configured as an A-plate such that its optic axis (i.e., which is also the slow axis for this uniaxial material) lies in the plane of the quartz layer.

The trim retarder 140 also includes a second retarder element 144 to increase the field of view of the LCoS panel 130. Accordingly, the second retarder element 144 will function typically as a C-plate. For example, in this embodiment, the second retarder element 144 is shown to include two form-birefringent anti-reflection (FBAR) stacks 144, each of which functions as a -C-plate and is coupled to a different side of the first retarder element 142. Each FBAR stack 144 is a periodic stack typically formed from alternating layers of contrasting refractive index materials. For example in one embodiment, each FBAR stack includes alternating layers of high and low refractive index materials. In another embodiment, each FBAR stack includes alternating layers of high, medium, and low refractive index materials. In each case, the thickness of each layer that contributes to the form-birefringence is limited to a fraction of the operating wavelength (e.g. a fraction of $\lambda$=550 nm). As is known in the art, a periodic stack of alternating index layers having thicknesses much less than the wavelength of light can be designed to form a zeroth order sub-wavelength grating (ZOG) that functions as a -C-plate retarder. Since the -C-plate retardance of these diffractive elements arises from the structure (form) of the alternating layers rather than from molecular birefringence, the alternating layers may be formed from normally isotropic materials. For example, some examples of suitable materials for the alternating layers include organic and inorganic dielectrics such as silica ($SiO_2$, n=1.46), tantala ($Ta_2O_5$, n=2.20), alumina ($Al_2O_3$, n=1.63), hafnia ($HfO_2$, n=1.85), titania ($TiO_2$, n=2.37), niobia ($Nb_2O_5$, n=2.19), and magnesium fluoride ($MgF_2$, n=1.38). FBAR coatings are discussed in further detail, for example, in US Pat. No. 7,170,574, which is hereby incorporated by reference.

Advantageously, since the trim retarder 140 can be fabricated entirely from inorganic materials (e.g., if the first retarder element 142 is formed from quartz while the second retarder element 144 is formed from thin film inorganic dielectric layers) a very stable and durable optical retarder that is ideal for use in high light flux conditions is provided. In addition, since the FBAR stacks include an anti-reflection function, reflections from the first retarder element 142 are reduced without needing to provide an additional anti-reflection coating. In fact, this full-function A/-C plate trim retarder provides an excellent balance between simplicity, durability, and low manufacturing costs.

Further advantageously, since the A-plate retardance of the trim retarder 140 is provided with a near half-wave retarder 142, the trim retarder 140 will function in an azimuthal angle insensitive manner, and can be formed using micro-fabrication techniques that require relatively loose physical thickness tolerances. In addition, since the near half-wave retarder 142 provides a moderately high through-put in the light-on state, the contrast compensation is acceptable.

Note that a true half-wave plate (i.e., which provides exactly half-wave retardance or 0.5 wave) is not suitable for use as the retarder element 142. In particular, a true half-wave retarder is expected to provide a low throughput in the light-on state, and thus a reduced contrast ratio. In fact, the instant invention is distinguished from the prior art (e.g., WO 01/79921 A2 to Candee et al) in that the retardance is selected to be shifted from exact half-wave retardance by a small amount. Since the retardance is shifted from true half-wave retardance, the trim retarder can be fabricated to provide a higher in-plane linear retardance than the residual in-plane off-state linear retardance of the VAN-mode panel, and such that the trim retarder can be clocked-in during assembly of the projection system.

Of course, the above embodiments have been provided as examples only. It will be appreciated by those of ordinary skill in the art that various modifications, alternate configurations, and/or equivalents will be employed without departing from the spirit and scope of the invention. For example, while the embodiment described with reference to Figs. 13a and 13b has been shown to include one or more -C-plate retarders, other embodiments of the instant invention only provide a single near-half wave retarder. In addition, while the trim retarder in accordance with the instant invention offers excellent contrast compensation in WGP-based VAN-mode LCoS microdisplay projection systems, it can also be used for contrast compensation in other projection systems (e.g., based on TN-mode LCoS panels). Accordingly, the scope of the invention is therefore intended to be limited solely by the scope of the appended claims.

**Claims**

1. A liquid crystal display projection system comprising:

   a reflective liquid crystal display panel having residual off-state birefringence at a predetermined wavelength; and
   a trim retarder for compensating for the residual off-state birefringence of the reflective liquid crystal display panel and for increasing an on-state/off-state contrast ratio of the liquid crystal display projection system,

   wherein the trim retarder includes a single-layer retarder element having an in-plane retardance for compensating for an in-plane component of the residual off-state birefringence, the in-plane retardance shifted from a half-wave at the predetermined wavelength by a predetermined amount, the predetermined amount less than about 0.15 wave at the predetermined wavelength.

2. A liquid crystal display projection system according to claim 1, wherein the predetermined amount is between 0.005 wave and 0.10 wave at the predetermined wavelength.

3. A liquid crystal display projection system according to claim 2, wherein the predetermined amount is 0.055 wave at the predetermined wavelength.

4. A liquid crystal display projection system according to claim 1, wherein the in-plane retardance is one of about 0.45 wave and about 0.55 wave at the predetermined wavelength.

5. A liquid crystal display projection system according to claim 1, wherein the trim retarder includes at least one retarder element having an out-of-plane retardance for compensating for an out-of-plane component of the residual off-state birefringence.

6. A liquid crystal display projection system according to claim 5, wherein the at least one retarder element having an out-of-plane retardance comprises a first form-birefringent anti-reflection coating coupled to a first side of the single-layer retarder element, and a second form-birefringent anti-reflection coating coupled to a second opposite side of the single-layer retarder element.

7. A liquid crystal display projection system according to claim 6, wherein the single-layer retarder element comprises a quartz plate.

8. A liquid crystal display projection system according to claim 1, wherein the single-layer retarder element comprises an inorganic birefringent crystal.

9. A liquid crystal display projection system according to claim 8, wherein the single-layer retarder element comprises a quartz plate.

10. A liquid crystal display projection system according to claim 1, wherein the reflective liquid crystal display panel comprises a vertically-aligned-nematic liquid crystal display panel and is optically coupled to a wire-grid polarizer-based polarizating beamsplitter.

11. A liquid crystal display projection system according to claim 1, wherein the in-plane retardance is shifted below a half-wave at the predetermined wavelength by the predetermined amount, wherein the reflective liquid crystal display panel has a slow axis substantially parallel to a bisector of S- and P- axes of the reflective liquid crystal display panel, and wherein a slow axis of the single-layer retarder element is in a quadrant adjacent to a quadrant including the slow axis of the reflective liquid crystal display.

12. A liquid crystal display projection system according to claim 1, wherein the in-plane retardance is shifted above a half-wave at the predetermined wavelength by the predetermined amount, wherein the reflective liquid crystal display panel has a slow axis substantially parallel to a bisector of S- and P- axes of the reflective liquid crystal display panel, and wherein a slow axis of the single-layer retarder element is in one of a quadrant including the slow axis of the reflective liquid crystal display and a quadrant diagonally opposite the quadrant including the slow axis of the reflective liquid crystal display.

13. A method of improving contrast ratio in a liquid crystal display projection system, the method comprising:

providing a trim retarder for compensating for residual off-state birefringence of a reflective liquid crystal display panel in the liquid crystal display projection system, the trim retarder including a single-layer retarder element having an in-plane retardance for compensating for an in-plane component of the residual off-state birefringence, the in-plane retardance shifted from a half-wave at the predetermined wavelength by a predetermined amount, the predetermined amount less than about 0.15 wave at the predetermined wavelength.

14. A method of improving contrast ratio according to claim 13 comprising orienting the trim retarder such that a slow axis azimuthal angle of the single-layer retarder element is substantially parallel to one of an S-axis and a P-axis of the reflective liquid crystal display panel.

15. A method of improving contrast ratio according to claim 14 comprising clocking the trim retarder about an axis perpendicular to a plane of the single-layer retarder element such that the slow axis azimuthal angle of the trim retarder is rotated away from the one of the S- and P-axes and such that the contrast ratio is maximized.

(Prior Art)
Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13a

Fig. 13b

Europäisches
Patentamt

European
Patent Office

Office européen
des brevets

## EUROPEAN SEARCH REPORT

Application Number

EP 08 15 8619

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/076150 A1 (HALE LEONARD G [US] ET AL) 5 April 2007 (2007-04-05) * paragraphs [0041], [0068]; table 2 * | 1,5-10, 13 | INV. G02F1/13363 |
| X | US 2006/066805 A1 (GRUNNET-JEPSEN ANDERS [US] ET AL) 30 March 2006 (2006-03-30) * paragraphs [0023], [0041]; figure 1 * | 1,5-10, 13 | |
| A | KIM L TAN ET AL: "50.3: Inorganic Trim Retarder Compensator for VAN-mode LCoS Projection Systems" SID 2006, 2006 SID INTERNATIONAL SYMPOSIUM, SOCIETY FOR INFORMATION DISPLAY, LO, vol. XXXVII, 24 May 2005 (2005-05-24), pages 1610-1613, XP007012801 ISSN: 0006-966X * the whole document * | 1-15 | |
| A | HENDRIX KAREN ET AL: "Birefringent films for contrast enhancement of liquid crystal on silicon projection systems" JOURNAL OF VACUUM SCIENCE AND TECHNOLOGY: PART A, AVS /AIP, MELVILLE, NY, US, vol. 24, no. 4, 23 June 2006 (2006-06-23), pages 1546-1551, XP012091119 ISSN: 0734-2101 * the whole document * | 1-15 | TECHNICAL FIELDS SEARCHED (IPC) G02F H04N |

The present search report has been drawn up for all claims

| Place of search | Date of completion of the search | Examiner |
|---|---|---|
| Munich | 17 October 2008 | Lüssem, Georg |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 08 15 8619

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2008

| Patent document cited in search report | | Publication date | Patent family member(s) | | Publication date |
|---|---|---|---|---|---|
| US 2007076150 | A1 | 05-04-2007 | US<br>WO | 2007077372 A1<br>2007040796 A2 | 05-04-2007<br>12-04-2007 |
| US 2006066805 | A1 | 30-03-2006 | WO | 2006039060 A1 | 13-04-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5576854 A, Schmidt
- US 6909473 B
- WO 0179921 A2
- US 7170574 B